# EUROPÄISCHE PATENTANMELDUNG

(11) **EP 1 211 711 A2**
(43) Veröffentlichungstag der Anmeldung: **05.06.2002**
(21) Anmeldenummer: 01000675.7
(22) Anmeldetag: 29.11.2001
(51) Int. Cl.: H01J 31/20, H04N 9/24

(54) **Kathodenstrahlröhre mit Anordnung zur Elektronenstrahlkontrolle**

(30) Priorität: 30.11.2000 DE 10059766
(71) Anmelder: Philips Corporate Intellectual Property GmbH, 52064 Aachen (DE); Koninklijke Philips Electronics N.V., 5621 BA Eindhoven (NL)
(72) Erfinder: Bechtel, Helmut, c/o Philips Corp. Intell. Prop., 52064, Aachen (DE); Busselt, Wolfgang, Philips Corp. Intell. Prop., 52064, Aachen (DE); Gläser, Harald, Philips Corp. Intell. Prop., Aachen, 52064 (DE)
(74) Vertreter: Volmer, Georg, Dipl.-Ing.

(57) **Zusammenfassung**

Die Erfindung beschreibt eine Kathodenstrahlröhre, bei der die Position des Elektronenstrahls (7,8,9) dadurch bestimmt wird, dass Detektionsstreifen (12,13) zwischen oder unter den einzelnen Leuchtstoffstreifen der Leuchtstoffschicht (11) angeordnet sind Die Detektionsstreifen (12,13) enthalten ein Halbleiterbauelement, welches das gemessene Stromsignal vergrößert. Dadurch wird die Positionsbestimmung des Elektronenstrahls (7,8, 9) eindeutiger und reproduzierbarer.

## Beschreibung

Die Erfindung betrifft eine Kathodenstrahlröhre ausgestattet mit einem Farbbildschirm, einer Elektronenkanone zur Emission mindestens eines Elektronenstrahls und einer Ablenkungsvorrichtung, wobei der Farbbildschirm eine Frontplatte, einen ersten Satz Detektionsstreifen und einen zweiten Satz Detektionsstreifen, eine Leuchtstoffschicht, ein Mittel zum Empfang von Signalen, die von den Detektionsstreifen generiert werden, und ein Mittel zur Weitergabe von Korrektursignalen an die Ablenkvorrichtung aufweist.

Eine Farbkathodenstrahlröhre weist einen Farbbildschirm, einen Hals und einen den Farbbildschirm mit dem Hals verbindenden Konus und eine im Inneren des Halses vorgesehene Elektronenkanone zur Emission mindestens eines Elektronenstrahls auf. Am Hals beenden sich Ablenkspulen, die den Elektronenstrahl horizontal und vertikal ablenken, so dass ein Zeilenraster entsteht. In den meisten Fällen enthalten Farbkathodenstrahlröhren drei Elektronenkanonen für die drei Grundfarben Rot, Grün und Blau, welche von den Ablenkspulen als Ganzes abgelenkt werden. Der Farbbildschirm weist eine Leuchtstoffschicht auf, in der die rot-, grün- bzw. blau-emittierenden Leuchtstoffe entweder als senkrechte Streifentripel oder im Muster aus im Dreieck angeordneten Punktetripeln aufgebracht sind. Um sicherzustellen, dass jeder der drei Elektronenstrahlen nur die für ihn bestimmten Leuchtstoffe trifft, ist eine sogenannte Schartenmaske dicht vor dem Farbbildschirm angebracht. Jedem Leuchtstofftripel ist in der Schartenmaske genau eine Öffnung, beispielsweise ein Schlitz oder ein Loch, zugeordnet, durch die gleichzeitig drei Elektronenstrahlbündel unter leicht verschiedenen Winkeln hindurchgehen.

Nachteilig bei einer solchen Schattenmaske ist, dass fast 80 % der Elektronen nicht durch die Schattenmaske gelangen, sondern auf die Schattenmaske treffen und dann abgeführt werden. Ein weiterer Nachteil einer Schattenmaske ist, dass während des Betriebs Mikrophony-Effekte auftreten können. Außerdem kann sich eine Schattenmaske beim Betrieb, durch die dadurch bedingte Erwärmung, verziehen und die Öffnungen der Schartenmaske sitzen nicht mehr an den richtigen Positionen.
Aus der WO 00/38212 ist eine Kathodenstrahlröhre mit einer Anordnung zur Elektronenstrahlkontrolle bekannt, bei der die Position des Elektronenstrahls dadurch bestimmt wird, dass Leiterbahnen unter jedem Leuchtstoffstreifen angeordnet sind. Aus der gemessenen Stromdifferenz zwischen zwei benachbarten Leiterbahnen kann die Position des Elektronenstrahls bestimmt und gegebenenfalls eine Korrektur vorgenommen werden. Derartige Kathodenstrahlröhren werden auch als Indexröhren bezeichnet.

In dieser Anordnung werden die Leiterbahnen ganz oder teilweise durch die Leuchtstoffschicht bedeckt. Die Leuchtstoffschicht selber wird meist mit einer dünnen Schicht aus Aluminium bedeckt, die nicht in Kontakt mit den Leiterbahnen steht. Die dünne Aluminiumschicht auf der Leuchtstoffschicht wirkt als Spiegel und reflektiert nach innen in die Röhre abgestrahltes sichtbares Licht in Richtung Frontplatte.

Nachteilig bei dieser Ausführung ist, dass nur etwa 40 bis 50 Prozent der Elektronen, die von der Elektronenstrahlkanone emittiert werden, die Leiterbahnen erreichen. Ist die Leuchtstoffschicht nicht mit einer Aluminiumschicht bedeckt, gelangen ca. 70 Prozent der Elektronen zu den Leiterbahnen. Durch die geringe Prozentzahl an Elektronen, welche durch die Leuchtstoffschicht zu den Leiterbahnen gelangen und dort ein Stromsignal erzeugen, sind die gemessenen Stromsignale teilweise zu klein und zu wenig reproduzierbar, um Änderungen der gemessenen Stromdifferenz immer eindeutig erkennen und zuordnen zu können.

Es ist deshalb eine Aufgabe der vorliegenden Erfindung, die Nachteile des Standes der Technik zu umgehen und eine verbesserte Kathodenstrahlröhre bereitzustellen.

Diese Aufgabe wird gelöst, durch eine Kathodenstrahlröhre ausgestattet mit einem Farbbildschirm, einer Elektronenkanone zur Emission mindestens eines Elektronenstrahls und einer Ablenkungsvorrichtung, wobei der Farbbildschirm eine Frontplatte, einen ersten Satz Detektionsstreifen und einen zweiten Satz Detektionsstreifen, eine Leuchtstoffschicht, ein Mittel zum Empfang von Signalen, die von den Detektionsstreifen generiert werden, und ein Mittel zur Weitergabe von Korrektursignalen an die Ablenkvorrichtung aufweist, wobei die Detektionsstreifen jeweils ein Halbleiterbauelement enthalten.
Durch die Verwendung eines Halbleiterbauelementes in den Detektionsstreifen können die Stromagnale, welche von den Detektionsstreifen generiert werden, um einige GrößenOrdnungen erhöht werden. Das gemessene Stromsignal wird dadurch auch bei kleinen Elektoonenströmen groß genug, um Änderungen der gemessenen Stromdifferenz eindeutig erkennen und einer Positionsänderung des Elektronenstrahls zuordnen zu können. Durch die Vergrößerung des gemessenen Stromsignals wird die erzielbare Schwarzluminanz erniedrigt und der Dunkelkontrast verbessert.

Es ist bevorzugt, dass das Halbleiterbauelement ausgewählt ist aus der Gruppe der pn-Dioden und der Schottky-Dioden.

Eine pn-Diode ist die einfachste Form eines Halbleiterbauelementes und lässt sich einfach und preiswert herstellen. Die hochenergetischen Elektronen des Elektronenstrahls werden in dem pn-Übergang des Halbleiterbauelements absorbiert und produzieren dort eine große Zahl an Ladungsträgern. Die Ladungsträger werden in dem sich ausbildenden Feld getrennt und werden als verstärkter Elektronenstrom gemessen.

In einer Schottky-Diode werden die hochenergetischen Elektronen des Elektronenstrahls in der Verarmungszone, welche sich unter dem Metall im Halbleiter befindet, absorbiert und produzieren dort eine große Zahl an Ladungsträgern. Die Ladungsträger werden in dem sich ausbildenden Feld getrennt und werden als verstärkter Elektronenstrom gemessen.

Es ist besonders bevorzugt, dass die pn-Diode eine erste Elektrode, eine n-leitende Schicht, eine p-leitende Schicht und eine zweite Elektrode aufweist.

Es ist besonders bevorzugt, dass der p-leitende Bereich der pn-Diode auf der der Elektronenkanone zugewandten Seite angeordnet ist.

Weiterhin ist es bevorzugt, dass die Leuchtstoffschicht mit einer Aluminiumschicht bedeckt ist.

Die dünne Aluminiumschicht auf der Leuchtstoffschicht wirkt als Spiegel und reflektiert nach innen in die Röhre abgestrahltes sichtbares Licht in Richtung Frontplatte. Dadurch wird die Effizienz der Indexröhre erhöht.

Es kann vorteilhaft sein, dass für die Höhe H eines Detektionsstreifens gilt H > D, wobei D die Schichtdicke der Leuchtstoffschicht ist.

Durch Anordnung der Detektionsstreifen zwischen den einzelnen Leuchtstoffstreifen der Leuchtstoffschicht wird verhindert, dass sich hohe Kapazitäten zwischen den Detektionsstreifen und der Aluminiumschicht ausbilden. Diese Kapazitäten können die Zeitkonstante bei der Ermittlung der Position des Elektronenstrahls negativ beeinflussen. Ein weiterer Vorteil dieser Anordnung ist, dass kein Stromausgleich zwischen zwei Detektionsstreifen durch Elektronenleitungsphänomene in der Leuchtstoffschicht stattfinden kann.

In dieser Ausführungsform kann es vorteilhaft sein, dass die Detektionsstreifen einen trapezförmigen Querschnitt aufweisen.

In dieser Ausführungsform kann es weiterhin vorteilhaft sein, dass die Seite eines Detektionsstreifen, die an die Frontplatte grenzt, schmaler ist als die Seite des Detektionsstreifens, die sich auf der Seite der Elektronenkanone befindet.

Durch diese Ausführungsform kann das Aufbringen der Aluminiumschicht mittels bekannter Aufdampfverfahren erfolgen, ohne das die Detektionsstreifen und die Aluminiumschicht elektrisch verbunden werden. Weiterhin kann das Aufbringen der Aluminiumschicht und der zweiten Elektrode des Halbleiterbauelementes mit pn-Übergang kann in einem einzigen Schritt erfolgen.

Es kann auch vorteilhaft sein, dass die Detektionsstreifen von der Leuchtstoffschicht bedeckt sind.

In dieser Ausführungsform ist es bevorzugt, dass die Elektrode einer pn-Diode, die auf der Seite der Elektronenkanone ist, ein transparentes Material enthält.
In dieser Ausführungsform wird das Stromsignal hauptsächlich durch den photoelektrischen Effekt, das heißt durch Absorption des vom Leuchtstoff emittierten Lichtes in der pn-Diode erzeugt. Daneben tragen hochenergetische Elektronen, die die Leuchtstoffschicht ohne nennenswerten Energieverlust durchdringen, zum Stromsignal bei.

In dieser Ausführungsform ist es auch bevorzugt, dass zwischen der Leuchtstoffschicht und den Detektionsstreifen sowie zwischen der Leuchtstoffschicht und der Frontplatte eine dielektrische Schicht aufgebracht ist.

Ist der Brechungsindex der dielektrischen Schicht niedriger als der Brechungsindex der Frontplatte, kann durch Aufbringen der dielektrischen Schicht auf dem gesamten Bildschirm die Menge an spekular reflektiertem Licht reduziert werden. Dies erhöht die Luminanz der Kathodenstrahlröhre und/oder verhindert das Auftreten von störenden äußeren Reflexionen. Die dielektrische Schicht verhindert auch, dass sich Kurzschlüsse, in dem Aluminium durch die Leuchtstoffschicht zu den Elektroden des Halbleiterbauelementes gelangt, bei der Aluminisierung des Farbbildschirms ausbilden und der gesamte Farbbildschirm unbrauchbar wird.

Im folgenden soll anhand von vier Figuren und sieben Ausführungsbeispielen die Erfindung näher erläutert werden. Dabei zeigen
- Fig 1: den Aufbau einer Kathodenstrahlröhre,
- Fig. 2 und Fig. 3: im Querschnitt mögliche Ausführungsformen eines Farbbildschirms und
- Fig 4: ein Schaltbild zum Betrieb eines Satzes an Detektionsstreifen.

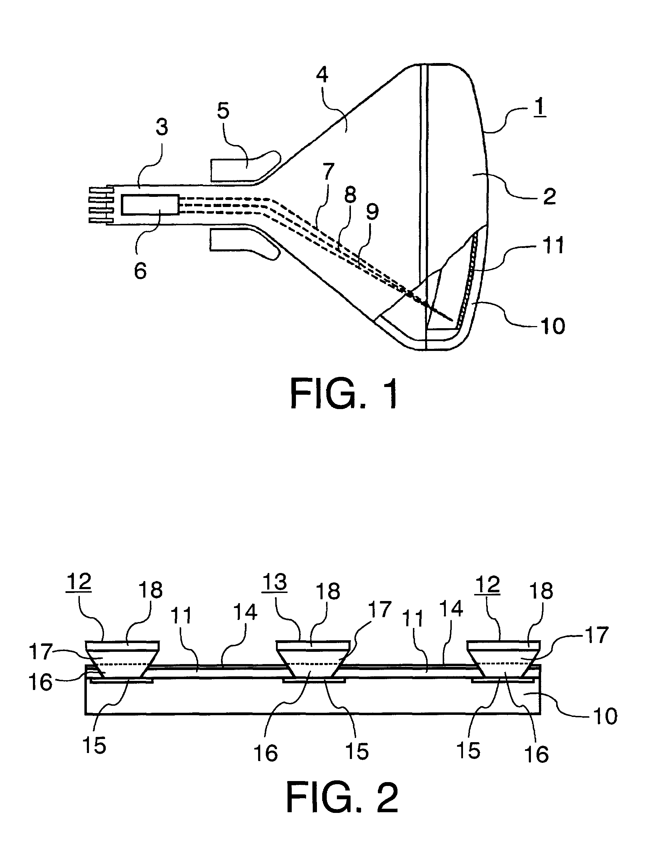

Fig 1 zeigt eine mögliche Ausführungsform der Erfindung. Die in Fig. 1 gezeigte Kathodenstrahlröhre ist eine Farbkathodenstrahlröhre 1, welche einen Farbbildschirm 2, einen Hals 3 und einen Konus 4, der den Farbbildschirm 2 und den Hals 3 miteinander verbindet, aufweist. Im Inneren des Halses 3 befindet sich eine Elektronenkanone 6, welche drei Elektronenstrahlen 7,8,9 erzeugt. Letztere breiten sich in dieser Ausführungsform einer Farbkathodenstrahlröhre 1 in einer Ebene, der In-line Ebene, aus und werden auf ihrem Weg zum Farbbildschirm 2 durch eine Ablenkungsvorrichtung 5 horizontal und vertikal abgelenkt. Der Farbbildschirm 2 weist eine Frontplatte 10 auf und auf der Frontplatte 10 befindet sich eine Leuchtstoffschicht 11. Die Leuchtstoffschicht 11 enthält rot-, grün- und blau-emittierende Leuchtstoffe, welche in Form von horizontalen Streifentripeln aufgebracht sind. Nicht dargestellt ist in Fig. 1, dass zwischen den einzelnen Streifentripeln der Leuchtstoffschicht 11 Detektionsstreifen, welche ein Halbleiterbauelement, insbesondere eine pn-Diode oder eine Schottky-Diode, enthalten, aufgebracht sind. Weiterhin nicht dargestellt sind ein Mittel zum Empfang von Signalen, die von den Detektionsstreifen 12,13 generiert werden und ein Mittel zur Weitergabe von Korrektursignalen an die Ablenkungsvorrichtung 5.

Alternativ kann die Farbkathodenstrahlröhre 1, insbesondere der Farbbildschirm 2, weitere Merkmale, wie eine Aluminiumschicht 14, welche auf der Leuchtstoffschicht 11 aufgebracht ist, aufweisen. Weiterhin kann der Farbbildschirm zwischen der Leuchtstoffechicht 11 und den Detektionsstreifen 12,13 sowie zwischen der Leuchtstoffschicht 11 und der Frontplatte 10 zusätzlich eine dielektrische Schicht aufweisen.

In Fig. 2 ist der Querschnitt einer Ausführungsform eines Farbbildschirms 2 gezeigt. Auf einer Frontplatte 10 aus Glas sind Detektionsstreifen 12,13 aufgebracht, welche ein Halbleiterbauelement enthalten. Das Halbleiterbauelement ist vorzugsweise eine pn-Diode, welche sich aus einer ersten Elektrode 15, einer n-leidtenden Schicht 16, einer p-leitenden Schicht 17 und einer zweiten Elektrode 18 zusammensetzt. Die erste Elektrode 15 sowie die zweite Elektrode 18 können ein Metall, eine Legierung, ein leitendes Oxid oder Kombinationen dieser Materialien enthalten. Es kann vorteilhaft sein, dass die Breite der n-leitenden Schicht 16 größer ist als die Breite der ersten Elektrode 15. Jeder Detektionsstreifen 12,13 kann vorzugsweise einen trapezförmigen Querschnitt aufweisen, wobei die Seite eines Detektionsstreifens 12,13, die an die Frontplatte 10 grenzt, schmaler ist als die Seite, die auf der Seite der Elektronenkanone 6 liegt. Die Leuchtstoffschicht 11 ist zwischen den Detektionsstreifen 12,13 aufgebracht. Als rot-emittierender Leuchtstoff kann beispielsweise Y₂O₂S:Eu, als blau-emittierender Leuchtstoff ZnS:Ag und als grün-emittierender Leuchtstoff kann ZnS:Cu,Au verwendet werden. Die Detektionsstreifen 12, welche alle elektrisch miteinander verbunden sind, bilden einen ersten Satz an Detektionsstreifen. Die Detektionsstreifen 13, welche auch alle elektrisch miteinander verbunden sind, sind der zweite Satz an Detektionsstreifen. Die Detektionsstreifen 12,13 sind alternierend aufgebracht. In dieser Anordnung werden die hochenergetischen Elektronen des Elektronenstrahls 7,8,9 im pn-Übergang des Halbleiterbauelements absorbiert und erzeugen dabei eine große Zahl von Ladungsträgern. Weiterhin wird bei dieser Ausführungsform des Farbbildschirms 2 Licht, welches in der Leuchtstoffschicht 11 erzeugt wird, von dem Halbleiterbauelement absorbiert. Daraus resultiert ein zusätzlicher Fotostrom, der das Stromsignal der Detektionsstreifen 12,13 weiter erhöht.

Auf der Leuchtstoffschicht 11 kann sich eine dünne Aluminiumschicht 14 befinden.

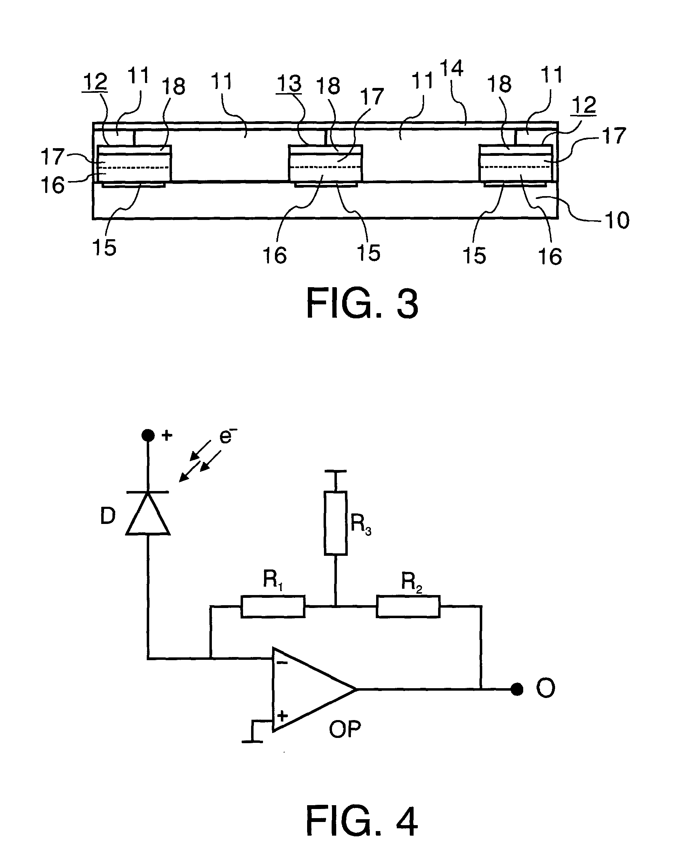

In Fig 3 ist eine weitere mögliche Ausführungsform eines Farbbildschirms 2 gazeigt. In diesem Fall sind die Derektionsstreifen 12,13 von der Leuchtstoffschicht 11 bedeckt. In dieser Ausrührungsform sind die zweiten Elektroden 18, welche auf der Seite der Elektronenkanone 6 liegen, aus einem transparenten, leitfähigen Material wie beispielsweise ITO. In dieser Anordnung wird das Stromsgnal hauptsächlich durch die Absorption von Licht, welches von den Leuchtstoffen in der Leuchtstoffschicht 11 emittiert wird, im pn-Übergang der pn-Diode erzeugt. Daneben tragen hochenergetische Elektronen, welche die Leuchtstoffschicht 11 beinahe ohne Energieverlust durchdringen, zum Stromsignal bei.

Ein Detektionsstreifen 12,13 mit einem Hableiterbauelement mit pn-Übergang, wird vorzugsweise derart angeordnet, dass die p-leitende Schicht 17 des Halbleiterbauelements sich auf der der Elektronenkanone 6 zugewandten Seite befindet. Damit die Elektronen hauptsächlich in der Sperrschicht zwischen der p-leitenden Schicht 17 und n-leitenden Schicht 16 des Halbleiterbauelements absorbiert werden, weist die zweite Elektrode 18, welche sich auf der p-leitenden Schicht 17 befindet, eine Schichtdicke zwischen 20 und 1000 nm auf. Die p-leitende Schicht 17 des Halbleiterbauelements weist vorzugsweise eine Schichtdicke zwischen 100 und 2000 nm auf. In dieser Ausführungsform ist die insgesamte Höhe H der Detektionsstreifen 12,13 größer als die Schichtdicke D der Leuchtstoffschicht 11, wobei letztere vorzugsweise zwischen 20 und 50 µm liegt.

Alternativ kann in beiden Ausführungsformen das Halbleiterbauelement auch eine Schottky-Diode enthalten. Dieses Halbleiterbauelement weist einen Metall-Hableiter-Übergang auf. In dieser Ausführungsform befindet sich auf einer ersten Elektrode 15, eine Schicht aus n-dotiertem oder p-dotiertem Halbleitermaterial. Auf dem Halbleitermaterial ist eine Schottky-Metallschicht, welche beispielsweise Mo, W, Pt, Ag, Au, Ni, Ti, NiFe oder Kombinationen dieser Materialien enthält, aufgebracht. Die elektrische Kontaktierung des Hableiterbauelementes erfolgt an der Schottky-Metallschicht und der ersten Elektrode 15.

In dieser Ausführungsform kann sich zwischen der Leuchtstoffschicht 11 und den Detektionsstreifen 12,13 sowie zwischen der Leuchtstoffschicht 11 und der Frontplatte 10 eine dielektrische Schicht aufgebracht sein.

Zur Herstellung eines Farbbildschirms 2 mit Detektionsstreifen 12,13 mit einer pn-Diode werden zunächst auf einer Frontplatte 10 aus Glas mittels Aufdampfen oder Sputtern in Form von Streifen erste Elektroden 15 aufgebracht. Auf jede erste Elektrode 15 wird mittels CVD(Chemical Vapour Deposition)-Verfahren oder Plasmaabscheidungsverfahren eine Schicht aus n-dotiertem amorphen Silicium oder aus n-dotierten III/V-Verbindungen aufgebracht. Als III-Verbindungen können beispielsweise Ga, Al oder In und als V-Verbindungen können zum Beispiel P, As oder Sb eingesetzt werden. Anschließend wird auf jede n-leitende Schicht 16 eine p-leitende Schicht 17 aufgebracht. Die Strukturierung der einzelnen Schichten kann mittels bekannter Photolithographie-Prozesse oder Ätzverfahren erfolgen. Alternativ können die erste Elektrode 15 sowie die n-leitende Schicht 16 und die p-leitende Schicht 17 des Halbleiterbaudements auch durch Druckverfahren hergestellt werden. Dazu werden zunächst die ersten Elektroden 15 auf das Glas der Frontplatte 10 gedruckt. Anschließend wird beispielsweise mittels Siebdruck eine Pulverschicht aus einem halbleitendem Material, zum Beispiel n-leitendes Silidum-Pulver, auf jede erste Elektrode 15 aufgebracht und in Argon-Atmosphäre gesintert. Sollen die Detektionsstreifen 12,13 einen trapezförmigen Querschnitt aufweisen kann der Siebdruck der Pulverschicht aus einem halbleitenden Material auf die erste Elektrode 15 in mehreren Lagen erfolgen, wobei die einzelnen Lagen mit zunehmendem Abstand von der Frontplatte 10 breiter werden. Die p-leitende Schicht 17 des Halbleiterbauelements wird anschließend durch Ionenimplantation oder thermischer Diffusion geeigneter Materialien, vorzugsweise Bor, hergestellt.

Alternativ können die Detektionsstreifen 12,13 mit trapezförmigen Querschnitt auch mittels Sandstrahlen hergestellt werden. Bei dieser Methode werden nach einer der eingangs beschriebenen Verfahren die erste Elektroden 15, die n-leitende Schicht 16 und die p-leitende Schicht 17 aufgebracht. Anschließend wird mittels Sandstrahlen der n-leitenden Schicht 16 und der p-leitenden Schicht 17 die trapezförmige Struktur erzeugt. Dazu werden die Sandstrahldüsen in einem Winkel von bis zu 40° zur Oberflächennormalen gestellt.

Detektionsstreifen 12,13 mit trapezförmigen Querschnitt können auch mittels selektiver Ätzverfahren, beispielsweise Unterätzen, hergestellt werden.

Die Leuchtstoffschicht 11 und die zweiten Elektroden 18 können je nach Ausführungsform des Farbbildschirms 2 zu unterschiedlichen Zeitpunkten des Herstellungsprozesses aufgebracht werden.

Im Fall, dass die Höhe H der Detektionsstreifen 12,13 größer als die Schichtdicke D der Leuchtstoffschicht 11 ist, werden im nächsten Schritt die Suspensionen der einzelnen Leuchtstoffe, die unter Elektronenstrahlanregung sichtbares Licht in den Farben Rot, Grün und Blau emittieren, mittels Druckverfahren in die Räume zwischen die Detektionsstreifen 12,13 eingebracht. Die gesamte Frontplatte 10 wird anschließend ausgeheizt.

Soll der Farbbildschirm 2 eine Aluminiumschicht 14 aufweisen, wird die Leuchtstoffschicht 11 mit einem dünnen organischen Film, beispielsweise aus Polyacrylat, bedeckt und anschließend wird eine Aluminiumschicht 14 vorzugsweise mit einer Schichtdicke zwischen 100 und 300 nm aufgebracht. Um eine ausreichende Haftung der Aluminiumschicht 14 auf der Leuchtstoffschicht 11 zu erhalten, kann der organische Film Löcher aufweisen, durch die Aluminium direkt auf die Leuchtstoffschicht 11 aufgebracht wird. Die organische Schicht wird beim Ausheizen des gesamten Farbbildschirms 2 rückstandslos entfernt. Falls die Detektionsstreifen 12,13 einen trapezförmigen Querschnitt aufweisen und die zweiten Elektroden 18 der Detektionsstreifen 12,13 Aluminium enthalten sollen, können die Aluminiumschicht 14 und die zweiten Elektroden 18 der Detektionsstreifen 12,13 mit einer pn-Diode in einem Prozessschritt aufgebracht werden. Ansonsten werden die zweiten Elektroden 18 separat mittels Sputtern oder Aufdampfen aufgebracht.

Sollen alternativ die Detektionsstreifen 12,13 von der Leuchtstoffschicht 11 bedeckt sein, wird zunächst mittels Aufdarnpfen oder Sputterns die zweite Elektrode 18 auf jeder p-leitenden Schicht 17 des Halbleiterbauelements aufgebracht. Mittels Siebdruck wird anschließend die Leuchtstoffschicht 11 aufgebracht. Anschließend kann wie eingangs beschrieben noch eine Aluminiumschicht 14 auf der Leuchtstoffschicht 11 aufgebracht werden.

Soll der Farbbildschirm 2 noch zusätzlich eine dielektrische Schicht aufweisen, kann eine wässrige Suspension eines anorganischen Kolloids, wie beispielsweise Al₂O₃, SiO₂, ZnO₂ oder ZrO₂, mit einem mittleren Teilchendurchmesser zwischen 20 und 150 nm hergestellt werden. Diese Suspension wird vor Abscheidung der Leuchtstoffschicht 11 derart auf die Frontplatte 10 und die Detektionsstreifen 12,13 aufgebracht, dass die dielektrische Schicht nach dem Trocknen eine Schichtdicke zwischen 100 nm und 1 µm aufweist. Alternativ kann die dielektrische Schicht auch durch Drucken mit geeigneten Kolloiddruckfarben oder - pasten, Aufdampfen oder Sputtern hergestellt werden.

In beiden Ausführungsformen werden die Detektionsstreifen 12 elektrisch miteinander verbunden sowie die Detektionsstreifen 13 werden elektrisch miteinander verbunden. Die beiden Sätze an Detektionsstreifen werden mit einer Detektorelektronik verbunden, welche ein Mittel zum Empfang von Signalen, die von den Detektionsstreifen 12,13 generiert werden, und ein Mittel zur Weitergabe von Korrektursignalen an die Ablenkvorrichtung 5 enthält.

Ein derartiger Farbbildschirm 2 kann dann zusammen mit einem Hals 3, einem den Farbbildschirm 2 mit dem Hals 3 verbindenden Konus 4, eine Ablenkungsvorrichtung 5 und eine im Inneren des Halaes 3 vorgesehene Elektronenkanone 6 zur Emission von drei Elektronenstrahlen 7,8,9 zum Bau einer Farbkathodenstrahlröhre 1 verwendet werden.

Fig. 4 zeigt ein Schaltbild zum Betrieb eines Satzes an Detektionsstreifen. Die Diode D stellt dabei einen Satz an Detektionsstreifen dar. Das Schaltbild zeigt eine Vergleichsschaltung mit einem Operationsverstärker OP, dessen positiver Eingang auf Masse liegt und an dessen negativen Eingang über eine in Sperrrichtung gepolte Diode D eine positive Spannung anliegt. Ein Pfad aus zwei in Serie geschalteten Widerständen R₁ und R₂ verbindet den negativen Eingang des Operationsverstärkers OP mit dem Ausgang des Operationsverstärkers OP, wobei zwischen den beiden seriellen Widerständen R₁ und R₂ eine Spannung über einen weiteren Widerstand R₃ gegen Masse anliegt.

Durch Anlegen einer reversen Biasspannung an die Detektionsstreifen 12,13, die ein Halbleiterbauelement, vorzugsweise eine pn-Diode oder eine Schottky-Diode, enthalten, kann die Größe der Verarmungszone und damit die Kapazität des Halbleiterbauelementes variiert werden. Bei Verwendung von Silicium als halbleitendem Material lässt sich die Kapazität C einer pn-Diode von 10 pF/mm² bei 0 V Biasspannung bis 0.05 pF/mm² bei 100 V Biasspannung variieren. Die Höhe der verwendbaren Biasspannung wird allein durch die Struktur der Diode D begrenzt.

Ein Satz an Detektionsstreifen weist meist eine Gesamtfläche zwischen 1000 und 2000 mm² auf. Damit ergeben sich bei geeigneter Biasspannung RC-Zeiten im µs- bis ms-Bereich.

Eine erfindungsgemäße Farbkathodenstrahlröhre 1 weist für jeden Satz an Detektionsstreifen eine solche Schaltung auf. Durch ein Mittel zum Empfang von Signalen, die von jeder Schaltung bzw. von jedem Satz an Detektionsstreifen generiert werden, wird ein Differenzstromsignal der gemessenen Stromsignale erzeugt, anhand dessen die Position der Elektronenstrahlen 7,8 und 9 bestimmt werden kann. Ist das erhaltene Differenzstromsignal gleich Null, so sind die Elektronenstrahlen 7,8 und 9 genau in der Mitte der korrespondierenden Leuchtstofflinie in der Leuchtstoffschicht 11. Besitzt das Differenzstromsignal einen positiven oder negativen Wert sind die Elektronenstrahlen 7, 8 und 9 nach oben oder nach unten in den Leuchtstofflinien verschoben. In diesem Fall kann durch ein Mittel zur Weitergabe von Korrektursignalen an die Ablenkvorrichtung 5 die Position der Elektronenstrahlen 7, 8 oder 9 korrigiert werden. Damit bei einem Horizontal-Scan die Elektronenstrahlen 7,8,9 jeweils nur eine Leuchtstofflinie anregen, werden die Elektronenstrahlen 7,8,9 nicht direkt untereinander, sondern um eine Leuchtstofflinie versetzt angeordnet.

Durch gleichzeitige Bestimmung der Position aller drei Elektronenstrahlen 7,8 und 9 durch ein Signal kann die Detektorelektronik einfach gehalten werden. In dieser Ausführung ist es von Vorteil, dass die Farbkathodenstrahlröhre 1 ein Korrektur-System aufweist, welches die Position der Elektronenstrahlen 7,8 und 9 zueinander kontrolliert und korrigiert. Dieses Korrektur-System verhindert den Fall, dass sich nur die Position eines Elektronenstrahls 7, 8 oder 9 verändert und durch ein gemessenes Differenzstromsignal alle drei Elektronenstrahlen 7, 8 und 9 als Ganzes korrigiert werden.

Alternativ kann die Farbkathodenstrahlröhre mit einem Elektronenstrahl, mit zwei oder mehr Elektronenstrahlen arbeiten.

Im folgenden werden Ausführungsformen der Erfindung erläutert, die beispielhafte Realisierungsmöglichkeiten darstellen.

### Ausführungsbeispiel 1

Zur Herstellung eines Farbbildschirms 2 wurden zunächst auf einer Frontplatte 10 aus Glas erste Elektroden 15 aus Al in Form von Streifen aufgebracht. Auf jede erste Elektrode 15 wurde mittels CVD-Verfahren eine n-leitende Schicht 16 aus Phosphor-dotiertem amorphen Silidum aufgebracht. Anschließend wurde auf jede n-leitende Schicht 16 eine p-leitende Schicht 17 aus Bor-dotiertem amorphen Silicium aufgebracht. Im nächsten Schritt wurden zur Herstellung der Leuchtstoffschicht 11 Suspensionen der einzelnen Leuchtstoffe mittels Druckverfahren in die Räume zwischen die Detektionsstreifen 12,13 eingebracht. Als rotemittierender Leuchtstoff wurde Y₂O₂S:Eu, als blau-emittierender Leuchtstoff wurde ZnS:Ag und als grün-emittierender Leuchtstoff wurde ZnS:Cu,Au eingesetzt. Die gesamte Frontplatte 10 wurde anschließend ausgeheizt. Im nächsten Schritt wurden die zweiten Elektroden 18 aus Al jeweils auf die p-leitenden Schichten 17 aufgesputtert.

Die Detektionsstreifen 12 wurden elektrisch miteinander verbunden und die Detektionsstreifen 13 wurden elektrisch miteinander verbunden. Die beiden erhaltenen Sätze an Detektionsstreifen wurden mit einer Detektorelektronik verbunden, welche ein Mittel zum Empfang von Signalen, die von den Detektionsstreifen 12,13 generiert werden, und ein Mittel zum Weitergabe von Korrektursignalen an die Ablenkvorrichtung 5 enthielt.

Ein derartiger Farbbildschirm 2 wurde zusammen mit einem Hals 3, einem den Farbbildschirm 2 mit dem Hals 3 verbindenden Konus 4, eine Ablenkungsvorrichtung 5 und eine im Inneren des Halses 3 vorgesehene Elektronenkanone 6 zur Emission von drei Elektronenstrahlen 7, 8, 9 zum Bau einer verbesserten Farbkathodenstrahlröhre 1 verwendet.

### Ausführungsbeispiel 2

Es wurden ein Farbbildschirm 2 analog wie in Ausführungsbeispiel 1 beschrieben hergestellt und zum Bau einer Farbkathodenstrahlröhre 1 verwendet, nur dass nach Abscheidung der p-leitenden Schicht 17 zuerst die zweite Elektrode 18 aufgesputtert und danach die Leuchtstoffschicht 11 aufgebracht wurde. Die Leuchtstoffschicht 11 bedeckte die Detektionsstreifen 12,13 vollständig.

### Ausführungsbeispiel 3

Es wurde ein Farbbildschirm 2 analog wie in Ausführungsbeispiel 1 beschrieben hergestellt und zum Bau einer Farbkathodenstrahlröhre 1 verwendet, nur dass nach Aufbringen der p-leitenden Schicht 17 mittels Sandstrahlen der n-leitenden Schicht 16 und der p-leitenden Schicht 17 eine trapezförmige Struktur der Detektionsstreifen 12,13 erzeugt wurde. Dazu wurden die Sandstrahldüsen in einem Winkel von 35° zur Oberflächennormalen gestellt.

### Ausführungsbeispiel 4

Es wurde ein Farbbildschirm 2 analog wie in Ausführungsbeispiel 1 beschrieben hergestellt und zum Bau einer Farbkathodenstrahlröhre 1 verwendet, nur dass vor Abscheidung der zweiten Elektroden 18 auf die Leuchtstoffschicht 11 ein dünner organischer Film aus Poly(*iso*-butylmethacrylat) aufgebracht wurde und zwar derart, dass einzelne Leuchtstoffpartikel nicht mit dem Film aus Polyacrylat bedeckt waren. Anschließend wurde die Aluminiumschicht 14 mit einer Schichtdicke von 200 nm unter Verwendung einer Maske abgeschieden. Die organische Schicht wurde später beim Ausheizen des gesamten Farbbildschirms 2 rückstandslos entfernt.

### Ausführungsbeispiel 5

Es wurde ein Farbbildschirm 2 analog wie in Ausführungsbeispiel 2 beschrieben hergestellt und zum Bau einer Farbkathodenstrahlröhre 1 verwendet, nur dass auf die Leuchtstoffschicht 11 ein dünner organischer Film aus Poly(*iso*-butylmethacrylat) aufgebracht wurde und zwar derart, dass einzelne Leuchtstoffpartikel nicht mit dem Film aus Polyacrylat bedeckt waren. Anschließend wurde die Aluminiumschicht 14 mit einer Schichtdicke von 100 nm abgeschieden. Die organische Schicht wurde später beim Ausheizen des gesamten Farbbildschirms 2 rückstandslos entfernt.

### Ausführungsbeispiel 6

Es wurde ein Farbbildschirm 2 analog wie in Ausführungsbeispiel 5 beschrieben hergestellt und zum Bau einer Farbkathodenstrahlröhre 1 verwendet, nur dass vor Abscheidung der Leuchtstoffschicht 11 eine wässrige Suspension aus kolloidalem SiO₂ mit einen mittleren Partikeldurchmesser von 80 nm und einem nicht-ionischen Tensid auf die gesamte Frontplatte 10 aufgebracht wurde. Durch Rotation der Frontplatte 10 wurde die Suspension gleichmäßig auf der Frontplatte und den Detektionsstreifen 12,13 verteilt. Nach Trocknung der gesamten Frontplatte 10 bei 200 °C wurde eine dielektrische Schicht mit einer Schichtdicke von 300 nm erhalten.

### Ausführungsbeispiel 7

Es wurde ein Farbbildschirm 2 analog wie in Ausführungsbeispiel 3 beschrieben hergestellt und zum Bau einer Farbkathodenstrahlröhre 1 verwendet, nur dass auf die Leuchtstoffschicht 11 ein dünner organischer Film aus Poly(*iso*-butylmethacrylat) aufgebracht wurde und zwar derart, dass einzelne Leuchtstoffpartikel nicht mit dem Film aus Polyacrylat bedeckt waren. Anschließend wurden in einem Schritt die zweiten Elektroden 18 und die Aluminiumschicht 14 jeweils mit einer Schichtdicke von 100 nm abgeschieden. Die organische Schicht wurde später beim Ausheizen des gesamten Farbbildschirms 2 rückstandslos entfernt.

## Patentansprüche

1. Kathodenstrahlröhre ausgestattet mit einem Farbbildschirm (2), einer Elektronenkanone (6) zur Emission mindestens eines Elektronenstrahls (7, 8, 9) und einer Ablenkungsvorrichtung (5), wobei der Farbbildschirm (2) eine Frontplatte (10), einen ersten Satz Detektionsstreifen und einen zweiten Satz Detektionsstreifen, eine Leuchtstoffschicht (11), sowie weiterhin ein Mittel zum Empfang von Signalen, die von den Detektionsstreifen generiert werden, und ein Mittel zur Weitergabe von Korrektursignalen an die Ablenkvorrichtung (5) aufweist, wobei die Detektionsstreifen (12, 13) jeweils ein Halbleiterbauelement enthalten.

2. Kathodenstrahlröhre nach Anspruch 1,
**dadurch gekennzeichnet,**
**dass** das Halbleiterbauelement ausgewählt ist aus der Gruppe der pn-Dioden und der Schottky-Dioden.

3. Kathodenstrahlröhre nach Anspruch 2,
**dadurch gekennzeichnet,**
**dass** eine pn-Diode eine erste Elektrode (15), eine n-leitende Schicht (16), eine p-leitende Schicht (17) und eine zweite Elektrode (18) enthält.

4. Kathodenstrahlröhre nach Anspruch 3,
**dadurch gekennzeichnet,**
**dass** die p-leitende Schicht (17) der pn-Diode auf der Elektronenkanone (6) zugewandten Seite angeordnet ist.

5. Kathodenstrahlröhre nach Anspruch 1,
**dadurch gekennzeichnet,**
**dass** die Leuchtstoffschicht (11) mit einer Aluminiumschicht (14) bedeckt ist.

6. Kathodenstrahlröhre nach Anspruch 1,
**dadurch gekennzeichnet,**
**dass** für die Höhe H eines Detektionsstreifens (12,13) gilt H > D, wobei D die Schichtdicke der Leuchtstoffschicht (11) ist.

7. Kathodenstrahlröhre nach Anspruch 1,
**dadurch gekennzeichnet,**
**dass** die Detektionsstreifen (12,13) einen trapezförmigen Querschnitt aufweisen.

8. Kathodenstrahlröhre nach Anspruch 7,
**dadurch gekennzeichnet,**
**dass** die Seite des Detektionsstreifens (12,13), die an die Frontplatte (10) grenzt, schmaler ist als die Seite, die auf der Seite der Elektronenkanone (6) ist.

9. Kathodenstrahlröhre nach Anspruch 1,
**dadurch gekennzeichnet,**
**dass** die Detektionsstreifen (12,13) von der Leuchtstoffschicht (11) bedeckt sind.

10. Kathodenstrahlröhre nach Anspruch 9,
**dadurch gekennzeichnet,**
**dass** die Elektrode einer pn-Diode, die auf der Seite der Elektronenkanone (6) liegt, ein transparentes Material enthält.

11. Kathodenstrahlröhre nach Anspruch 9,
**dadurch gekennzeichnet,**
**dass** zwischen der Leuchtstoffschicht (11) und den Detektionsstreifen (12,13) sowie zwischen der Leuchtstoffschicht (11) und der Frontplatte (10) eine dielektrische Schicht aufgebracht ist.
